# EUROPÄISCHE PATENTSCHRIFT

(11) **EP 0 987 233 B1**
(45) Veröffentlichungstag und Bekanntmachung des Hinweises auf die Patenterteilung: **19.11.2003**
(21) Anmeldenummer: 99115374.3
(22) Anmeldetag: 04.08.1999
(51) Int. Cl.: C04B 37/02, G01F 1/58, B28B 23/00

(54) **Verfahren zur Herstellung eines Keramikbauteils mit einem Cermet-Körper**
Method of making a ceramic article containing a cermet-body
Procédé de fabrication d'un article en ceramique contenant un corps en cermet

(30) Priorität: 21.08.1998 DE 19837953
(43) Veröffentlichungstag der Anmeldung: 22.03.2000
(73) Patentinhaber: Friatec Aktiengesellschaft, 68229 Mannheim (DE); KROHNE MESSTECHNIK GMBH & CO. KG, 47058 Duisburg (DE)
(72) Erfinder: Bitz, Günther, 68229 Mannheim (DE); Graf, Hans-Joachim, 68199 Mannheim (DE); Mayer, Helmut, 69168 Wiesloch (DE)
(74) Vertreter: Schmitt, Meinrad, Dipl.-Ing.

(56) Entgegenhaltungen:
- DE-A- 4 335 697
- DE-C- 849 224
- M.D. KELLY: "Direct bonding of Mo and Nb feedthroughs in electronic-grade Al2O3" CERAMIC ENGINEERING AND SCIENCE PROCEEDINGS, Bd. 3, Nr. 9/10, September 1982 (1982-09) - Oktober 1982 (1982-10), Seiten 504-511, XP002121027 Columbus,Ohio,US

## Beschreibung

Die Erfindung bezieht sich auf ein Verfahren zur Herstellung eines Keramikbauteils mit einem Cermet-Körper, insbesondere einer stabförmigen Cermet-Elektrode, gemäß den im Oberbegriff des Patentanspruchs 1 angegebenen Merkmalen.

Aus dem deutschen Patent DE 43 35 697 C2 ist ein derartiges Verfahren bekannt, gemäß welchem als Cermet-Körper eine stabförmige Cermet-Elektrode mit einer konvex-balligen Form verwendet wird, deren größter Durchmesser im Bereich des Zentrums des Keramikbauteils liegt und / oder bei welchem die Bohrung mit einem sich über die Länge ändernden Durchmesser versehen wird, welcher in den Austrittsbereichen der Cermet-Elektrode größer als im Zentrum des Keramikbauteils ist. In den Austrittsbereichen der Cermet-Elektrode wird zwischen dieser und der Bohrung eine Durchmesserdifferenz zwischen 0,05 und 0,1 mm vorgegeben, während im Inneren des Keramikbauteils die Cermet-Elektrode an der Bohrungswand anliegt. Die in die Bohrung derart eingesetzte Cermet-Elektrode wird zusammen mit der grünen Keramik gesintert, wobei unter plastischer Verformung der Materialien an den Kontaktstellen von Keramikbauteil und Cermet-Elektrode die Fügestelle gebildet wird. Hierdurch wird eine hochvakuumdichte, aber spannungsarme Fügestelle zwischen der Wandung der Bohrung und der Cermet-Elektrode hergestellt. Das Verfahren erfordert einen nicht unerheblichen Aufwand, wobei sehr enge Toleranzen eingehalten werden müssen, um zur Vermeidung von Ausschuß die erwünschte hochvakuumdichte, aber spannungsarme Fügestelle herstellen zu können.

Ferner ist aus der deutschen Patentanmeldung DE 197 22 728 A1 ein Verbundkörper und ein Verfahren zu dessen Herstellung bekannt, welcher aus einem Hartmetall-, Cermet-, oder Keramiksubstrat-Körper besteht. Hierbei wird aus einer Ausgangspulvermischung ein Grünling vorgepreßt, entwachst und anschließend in einem Mikrowellenfeld gesintert und mit einer Beschichtung aus einer oder mehreren Lagen überzogen. Der Grünling wird bei noch offener Porosität weiter erwärmt und bei einer Temperatur zwischen 600 °C und 1100 °C mit Reaktionsgasen und/oder sublimierbaren Feststoffen beaufschlagt, welche für die Beschichtung notwendig sind. Nachfolgend wird die Temperatur weiter erhöht und der Grünling durch Sintern vollständig verdichtet, bis schließlich die Beschichtung aufgetragen wird. Ein derart hergestellter Verbundkörper soll eine verbesserte Haftung der Beschichtung aufweisen und insbesondere als Schneidplatte zur zerspanenden Bearbeitung oder als Hochtemperaturwerkstoff eingesetzt werden können. Hierdurch ist weder ein Keramikbauteil mit einem zumindest teilweise in das Innere desselben integrierten Cermet-Körper vorbekannt noch werden dem Fachmann Anregungen zur Herstellung eines Keramikbauteils mit zumindest teilweise integriertem Cermet-Körper nahegelegt.

Des weiteren ist aus der deutschen Patentanmeldung DE 37 04 410 A1 ein Verfahren zum Befestigen eines Stabes oder einer Elektrode in ein Keramikbauteil bekannt, gemäß welchem vor dem Sintern in eine Bohrung ein Stab angeordnet wird. Der Stab weist innerhalb der Bohrung gestufte oder ballig ausgeführte Abschnitte auf und besitzt einen größeren Wärmedehnungskoeffizienten als das Keramikbauteil. Nach dem Sintern schrumpft der Stab beim Abkühlen sowohl in radialer als auch in axialer Richtung stärker als das umgebende Keramikbauteil. Hierdurch erfolgt eine Klemmung des Stabes über die genannten Abschnitte an den anliegenden Bereichen des Keramikbauteils, um eine Fixierung und luftdichte Befestigung im Keramikbauteil zu erhalten. Infolge der Klemmung entstehen in den Anlagebereichen des Keramikbauteils nicht unerhebliche Spannungen und Belastungen, welche vor allem bei späteren Kraft- oder Temperaturänderungen sich nachteilig erweisen können und zu Rissen und letztendlich Undichtigkeiten im Fügebereich zwischen dem Stab und dem Keramikbauteil führen können.

Hiervon ausgehend liegt der Erfindung die Aufgabe zugrunde, das Verfahren dahingehend weiterzubilden, daß der Aufwand reduziert wird und in reproduzierbarer Weise das den Anforderungen entsprechende Keramikbauteil mit integriertem Cermet-Körper hergestellt werden kann. Unzulässig hohe Spannungen im Fügebereich sowie Materialschädigungen und hieraus resultierende Undichtigkeiten sollen mit hoher Sicherheit vermieden werden.

Die Lösung dieser Aufgabe erfolgt gemäß den im Patentanspruch 1 angegebenen Merkmalen.

Das vorgeschlagene Verfahren ermöglicht mit geringem Aufwand problemlos die Herstellung des Keramikbauteils mit integriertem Cermet-Körper, welcher als Grünling vor dem Verdichten und Sintern in die Keramikmasse eingesetzt wird. Der Grünling ist vorgefertigt und vorverdichtet und kann problemlos in eine Form eingebracht und an der gewünschten Stelle positioniert werden. Nachfolgend wird die Keramik einem bekannten Formgebungsverfahren unterworfen, wobei die Keramikmasse mit dem Cermet-Körper verdichtet wird. Anschließend wird die gemeinsame Sinterung durchgeführt.

Die Keramikmasse kann als Pulver vorliegen oder in einer zum Gießen geeigneten Form, wie insbesondere als Suspension. Als Formgebungsverfahren gelangen insbesondere das Formpressen, das isostatische Pressen oder das Gießen zum Einsatz. Beim Formpressen oder dem isostatischen Pressen erfolgt die Verdichtung durch den einwirkenden Pressdruck, während beim Gießen, insbesondere in einer Gipsform oder dergleichen, durch Flüssigkeits- bzw. Wasserentzug die Dichte vergrößert wird. Im Rahmen der Erfindung kann der Cermet-Körper insbesondere in Form eines Stiftes oder einer Platte als Grünling verwendet werden und nach dem Sintern insbesondere als Elektrode genutzt werden.

In bevorzugter Weise wird die Keramikmasse als Pulver in einen Hohlraum, welcher der Form des fertigen Keramikbauteils zumindest näherungsweise entspricht, zunächst teilweise eingefüllt. Nachfolgend wird der Cermet-Körper, insbesondere die stiftförmige Cermet-Elektrode, eingebracht und schließlich wird der Hohlraum in der erforderlichen Weise mit dem restlichen Teil der Keramikmasse aufgefüllt. Daraufhin erfolgt insbesondere durch Trockenpressen die Verdichtung und schließlich wird die Sinterung durchgeführt. Wird die Keramikmasse in flüssiger Form und/oder als Suspension bereitgestellt, so wird der Cermet-Körper in zweckmäßiger Weise zuvor im Hohlraum der Form mit Arretierungsmitteln in der gewünschten Position festgelegt und nachfolgend wird die Keramikmasse in den genannten Hohlraum der Form durch Gießen, insbesondere Spritzgießen, eingebracht. Entsprechend dem jeweilis zur Anwendung gelangenden Formgebungsverfahren erfolgt in vorteilhafter Weise die oben erwähnte Verdichtung, wobei die Dichte der Keramikmasse vergrößert wird und eine gleichmäßige Verteilung und Anlage an der Außenfläche der Cermet-Elektrode erreicht wird. Vor dem Sintern wird somit in einer ersten Stufe eine Vorverdichtung durchgeführt. Beim Pressen erfährt der Cermet-Körper eine Verformung quer zur Vorzugsrichtung des einwirkenden Preßdrucks. Wird beispielsweise eine im wesentlichen zylindrische Cermet-Elektrode in die Keramikmasse eingebracht, so wirkt der Preßdruck im wesentlichen orthogonal zur Längsachse der Cermet-Elektrode. Hierbei wird die Elektrode beim Pressen derart plastisch verformt, daß aus der kreisrunden Querschnittsfläche eine ovale oder etwa elliptische Querschnittsfläche entsteht, deren größte Hauptachse im wesentlichen orthogonal zur Richtung des einwirkenden Preßdruckes liegt. Während des Sinterns erfolgt in einer zweiten Stufe die weitere Verdichtung der Keramikmasse und ebenso des als Grünling vorgeformten und vorverdichteten Cermet-Körpers. Nach dem gemeinsamen Sintern des Keramikbauteils mit der Cermet-Elektrode, ist deren Querschnittsfläche gleichermaßen ovalisiert. Nach dem Sintern ist der Cermet-Körper über einen wesentlichen Teil seiner Gesamtlänge in das Keramikbauteil integriert, wobei über den Umfang der Außenfläche des Cermet-Körpers eine geschlossene dichte, insbesondere hochvakuumdichte, Fügefläche vorhanden ist. Die Fügefläche weist eine vorgebbare Länge auf, insbesondere im wesentlichen gleich groß wie die Dichte des Keramikbauteils, in welches der Cermet-Körper integriert ist, wobei Belastungs- oder Spannungsspitzen vermieden werden.

In einer alternativen Ausgestaltung wird eine gießfähige Keramikmasse, insbesondere als Suspension, in eine Form aus Gips oder dergleichen eingebracht. Der grüne Cermet-Körper, der insbesondere als stiftförmige Cermet-Elektrode vorliegt, ist in der Form in geeigneter Weise festgelegt, insbesondere mit wenigstens einem freien Ende in die Form eingesteckt, wobei er sich im übrigen in der geforderten Ausrichtung in dem die gießfähige Keramikmasse aufnehmenden Hohlraum der Form befindet. Die Keramikmasse wird insbesondere durch Gießen in den genannten Hohlraum der Form eingebracht und umgibt danach im Berich des Hohlraumes den Cermet-Körper vollständig. Durch Flüssigkeitsentzug, insbesondere Wasserentzug, der gegossenen Keramikmasse erfolgt deren Verdichtung und schließlich wird der derart gefertigte Formkörper mit integriertem Cermet-Körper der Sinterung unterworfen.

Die Erfindung wird nachfolgend anhand des in der Zeichnung dargestellten Ausführungsbeispiels näher erläutert, ohne daß insoweit eine Einschränkung der Erfindung erfolgt. Es zeigen:
- Fig. 1: schematisch in einem axialen Schnitt eine Preßform zur Herstellung eines ringförmigen Keramikbauteils,
- Fig. 2: eine seitliche Ansicht des um 90° um die Längsachse gedrehten Keramikbauteils.

Die Preßform 2 enthält ein Außenteil 4 mit einer im wesentlichen zylindrischen Innenfläche 6 und einem zur Längsachse 8 gleichfalls koaxial angeordneten, zentralen Bolzen 10. Das Außenteil 4 kann als Rohr oder topfförmig ausgebildet sein, wobei am unteren Ende als Abschluß ein Boden 12 vorgesehen ist. Zwischen der Innenfläche 6 und den zentralen, insbesondere zylindrischen Bolzen 10 ist somit ein ringförmiger Hohlraum 14 vorhanden.

In dem genannten Hohlraum 14 wird durch die obere ringförmige Öffnung 16 ein erster Teil 18 der körnigen oder pulverförmigen Keramikmasse eingefüllt, wobei in zweckmäßiger Weise die Längsachse 8 der Preßform 2 vertikal ausgerichtet ist. Nachfolgend werden die beiden Cermet-Elektroden 20, 21 durch die Öffnung 16 von oben in den Hohlraum 14 eingebracht und oben auf den ersten Teil 18 der Keramikmasse aufgelegt, wobei insbesondere eine diametrale Ausrichtung der beiden Cermet-Elektroden 20, 21 durchgeführt wird. Wesentlich ist hierbei, daß diese Cermet-Elektroden 20, 21 als Grünling bereits ausgebildet sind und somit eine hinreichend stabile Struktur zur einfachen Handhabung beim Einlegen in die Preßform 2 aufweisen. Ferner ist von Bedeutung, daß die Keramikmasse und die Cermet-Elektrode zumindest näherungsweise gleiche Korngrößen und/oder gleiches Schwindungsverhalten beim Sintern aufweisen. Die bevorzugt zylindrischen Cermet-Elektroden 20, 21 besitzen einen im wesentlichen kreisförmigen Querschnitt und werden zumindest näherungsweise radial, bezogen auf die Längsachse 8, in den Hohraum 14 eingebracht, wobei die Länge der Cermet-Elektroden 20, 21 maximal gleich groß ist wie die radiale Spaltbreite des Hohlraumes 14. Die Cermet-Elektroden können problemlos von einem stangenförmigen Grünling mit der erforderlichen Länge abgeschnitten werden. Entsprechend der Gesamtlänge des stabförmigen Grünlings können aus diesem eine Anzahl von Cermet-Elektroden mit geringem Aufwand hergestellt werden. Nach dem exakten Ausrichten der Cermet-Elektroden 20, 21 wird in die Preßform bzw. deren Hohlraum 14 der restliche zweite Teil 22 der Keramikmasse eingebracht.

In einem weiteren Verfahrensschritt erfolgt nunmehr die gemeinsame Pressung der gesamten Keramikmasse 18, 20 gemeinsam mit den Cermet-Elektroden 20, 21. Schließlich wird mittels eines Stempels 24, dessen Formgebung der des Hohlraumes 14 entspricht, also beim vorliegenden Ausführungsbeispiel gleichfalls ringförmig ausgebildet ist, mit dem erforderlichen Preßdruck die Verdichtung der Keramikmasse 18, 22 durchgeführt. Hierbei kommt es zu einer Verformung der eingesetzten grünen Cermet-Elektroden 20, 21 quer zur Preßrichtung 26. Schließlich wird in einem letzten Verfahrensschritt die Sinterung des derart vorgefertigten Formkörpers durchgeführt. Beim Sintern wächst der Keramikanteil des Cermets mit der Keramikmasse fugenlos zusammen.

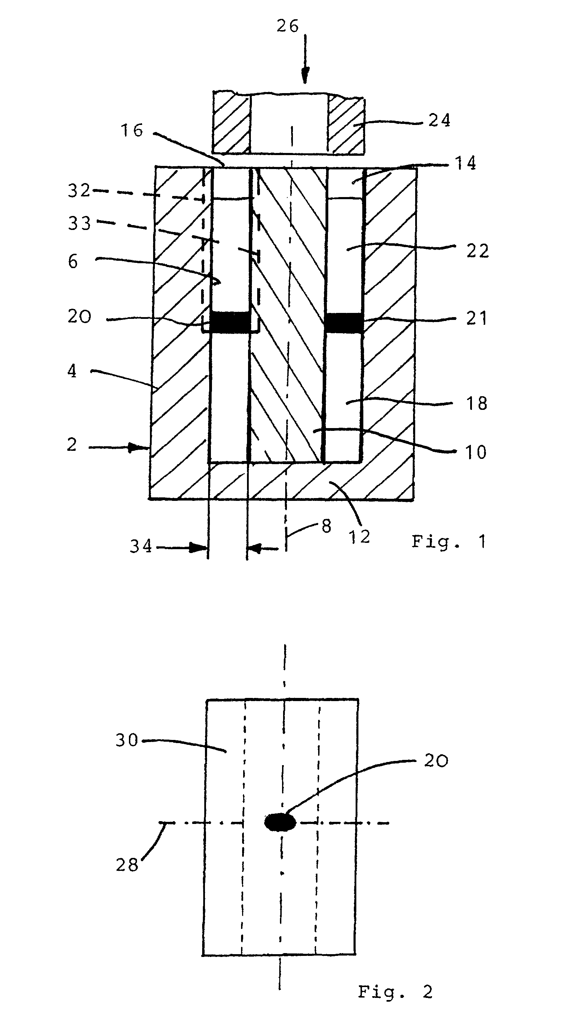

Fig. 2 zeigt eine Ansicht des gepreßten oder auch des bereits gesinterten Keramikbauteils 30 in einer um 90° gegenüber Fig. 1 gedrehten Position. Von der Cermet-Elektrode 20 ist die radial außenliegende Stirnfläche zu erkennen, wobei aus Gründen der Klarheit die bereits erläuterte Deformation des ursprünglich kreisförmigen Querschnitts in eine ovale oder quasi elliptische Form gut zu erkennen ist. Wie ferner ersichtlich, liegt die große Hauptachse der deformierten Querschnittsfläche der Cermet-Elektrode im wesentlichen in einer Radialebene 28.

In einer alternativen Ausgestaltung enthält die Form 2 Arretierungsmittel 32, 33, welche in Fig. 1 mit gestrichelten Linien angedeutet sind. Diese Arretierungsmittel 32, 33 sind als Längsnuten im Außenteil 4 und dem zentralen Bolzen 10 angeordnet, welche etwa in der Mitte der Längserstreckung des Hohlraumes 14 enden. In diese Längsnuten 32, 33 wird die Cermet-Elektrode 20 eingelegt, wobei die Länge der Cermet-Elektrode 20 eine derartige Länge aufweist, daß sie an den unteren Enden der Längsnuten 32, 33 aufliegt. Die Arretierungsmittel 32, 33 stellen eine definierte Positionierung des Grünlings der Cermet-Elektrode 20 sicher und beim nachfolgenden Einfüllen der Keramikmasse, sei es als Pulver oder als Flüssigkeit bzw. Suspension, ist eine unerwünschte Verlagerung des Grünlings der Cermet-Elektrode nicht zu befürchten.

Nach dem Einbringen der Keramikmasse in den Hohlraum 14, umgibt die Keramikmasse den Grünling der Cermet-Elektrode über den gesamten Umfang, und zwar über eine Länge entsprechend der Breite 34 des Hohlraumes 14. Nach dem Sintern ist die Cermet-Elektrode entsprechend der Breite 34 im wesentlichen über ihre gesamte Länge sowie über ihren gesamten Umfang fest und dicht in den Keramikkörper integriert. Es ist somit eine über den Umfang geschlossene dichte Fügefläche vorhanden, deren Länge der Breite 34 des Hohlraumes 14 und/oder im wesentlichen der Gesamtlänge der Cermet-Elektrode entspricht.

Bei dem erfindungsgemäßen Verfahren entfallen aufwendige Vorbereitungen wie Bohren eines vorgeformten Keramikkörpers oder die besondere ballige Formgebung der Innenfläche der Bohrung oder der Außenfläche der Cermet-Elektrode gemäß dem eingangs erwähnten deutschen Patent. Besondere Fertigungstoleranzen, sei es bei der Herstellung des Cermet-Körpers oder einer Bohrung in einem bereits verdichteten Keramikformkörper entfallen. Die Werkstoffe der Keramikmasse einerseits und des Cermet-Körpers andererseits werden erfindungsgemäß derart aufeinander abgestimmt, daß zumindest näherungsweise überwiegend gleiche Korngrößen und/oder gleiches Schwindungsverhalten beim Sintern erreicht wird.

Durch die Erläuterung der Herstellung eines ringförmigen Keramikbauteils erfolgt keine dahingehende Beschränkung der Erfindung. Vielmehr können nach dem erfindungsgemäßen Verfahren probelmlos auch ebene Keramikbauteile oder dreidimensionale Bauteile beliebiger Konturen mit integriertem Cermet-Körper, insbesondere Cermet-Elektrode gefertigt werden.

### Bezugszeichen

- 2: Preßform
- 4: Außenteil
- 6: Innenfläche
- 8: Längsachse
- 10: zentraler Bolzen
- 12: Boden
- 14: Hohlraum
- 16: obere Öffnung
- 18: erster Teil
- 20, 21: Cermet-Elektrode
- 22: zweiter Teil
- 24: Stempel
- 26: Preßrichtung
- 28: Radialebene
- 30: Keramikbauteil
- 32, 33: Arretierungsmittel / Längsnut
- 34: Breite von 14

## Patentansprüche

1. Verfahren zur Herstellung eines Keramikbauteils (30) mit wenigstens einem Cermet-Körper (20, 21), insbesondere einer Cermet-Elektrode, wobei zunächst der Cermet-Körper (20, 21) als Grünling hergestellt wird, daß der Cermet-Körper (20, 21) in die Keramikmasse (18, 22) eingebracht wird, daß nachfolgend die Keramikmasse gemeinsam mit dem als Grünling vorliegenden Cermet-Körper verdichtet und schließlich die Sinterung durchgeführt wird.

2. Verfahren nach Anspruch 1, **dadurch gekennzeichnet, daß** zur Vorbereitung der Verdichtung, insbesondere des Pressens, ein Hohlraum (14) einer Form (2) teilweise mit der Keramikmasse gefüllt wird, daß auf die derart teilweise eingefüllte Keramikmasse der Cermet-Körper (20, 21) gelegt wird, daß in einem weiteren Verfahrensschritt der restliche zweite Teil (22) der Keramikmasse in den Hohlraum (14) der Form (2) eingefüllt wird und daß nachfolgend zur Vorbereitung des Sinterns der Formkörper des Keramikbauteils verdichtet und insbesondere gepreßt wird, wobei der Cermet-Körper (20, 21) in den Formkörper integriert wird.

3. Verfahren nach Anspruch 1, **dadurch gekennzeichnet, daß** zur Vorbereitung der Verdichtung der Cermet-Körper (20, 21) in einer Form derart fixiert wird, daß er sich zumindest teilweise in deren Hohlraum (14) befindet, daß die Keramikmasse in den Hohlraum (14) insbesondere durch Gießen eingebracht wird, wobei zumindest der im Hohlraum (14) befindliche Teil des Cermet-Körpers (20, 21) von der Keramikmasse vollständig eingeschlossen wird, und/oder daß nachfolgend die Verdichtung, insbesondere durch Flüssigkeitsentzug der Keramikmasse durchgeführt wird.

4. Verfahren nach Anspruch 2, **dadurch gekennzeichnet, daß** beim Pressen des Formkörpers der in die Keramikmasse eingesetzte Cermet-Körper (20, 21) quer zur Preßrichtung verformt wird und/oder daß beim Pressen die Außenabmessungen des Grünlings des Cermet-Körpers (20, 21) in Preßrichtung reduziert und quer zur Preßrichtung vergrößert werden.

5. Verfahren nach Anspruch 3 oder 4, **dadurch gekennzeichnet, daß** die vor dem Pressen im wesentlichen kreisförmige Querschnittsfläche des Cermet-Körpers (20, 21) beim Pressen derart verformt wird, daß die Querschnittsfläche nach dem Pressen oval ist, wobei die große Hauptachse im wesentlichen orthogonal zur Preßrichtung liegt.

6. Verfahren nach einem der Ansprüche 1 bis 5, **dadurch gekennzeichnet, daß** der Grünling des Cermet-Körpers (20, 21) überwiegend eine Korngröße aufweist, die zumindest näherungsweise gleich groß ist wie die überwiegenden Korngrößen der Keramikmasse.

7. Verfahren nach einem der Ansprüche 1 bis 6, **dadurch gekennzeichnet, daß** für den Grünling des Cermet-Körpers (20, 21) ein Werkstoff ausgewählt wird, dessen Schwindungswert beim Sintern zumindest näherungsweise gleich groß ist wie der Schwindungswert des Werkstoffs des Keramikbauteils.

## Claims

1. Method for manufacturing a ceramic component (30) comprising at least one cermet body (20, 21 ), in particular a cermet electrode, wherein firstly the cermet body (20, 21) is produced as a green compact, that the cermet body (20, 21) is introduced into the ceramic composition (18, 22), that thereafter the ceramic composition together with the cermet body existing as a green compact is compacted and finally sintering is carried out.

2. Method according to claim 1, **characterised in that**, to prepare for compaction, in particular pressing, a cavity (14) of a mould (2) is partially filled with the ceramic composition, **in that** the cermet body (20, 21) is placed on the ceramic composition partially filled in this way, **in that** in a further step of the method the remaining second portion (22) of the ceramic composition is poured into the cavity (14) of the mould (2) and **in that** thereafter, to prepare for sintering, the mould part of the ceramic component is compacted and in particular pressed, the cermet body (20, 21) being integrated into the mould part.

3. Method according to claim 1, **characterised in that**, to prepare for compaction, the cermet body (20, 21) is fixed in a mould in such a way that it is located at least partially in the cavity (14) thereof, **in that** the ceramic composition is introduced into the cavity (14), in particular by casting, at least the portion of the cermet body (20, 21) located in the cavity being completely enclosed by the ceramic composition, and/or **in that** thereafter compaction is carried out, in particular by removing liquid from the ceramic composition.

4. Method according to claim 2, **characterised in that**, during pressing of the mould part, the cermet body (20, 21) inserted into the ceramic composition is deformed transversely to the direction of pressing and/or **in that** during pressing the outer dimensions of the green compact of the cermet body (20, 21) are reduced in the direction of pressing and enlarged transversely to the direction of pressing.

5. Method according to claim 3 or 4, **characterised in that** the cross-sectional area of the cermet body (20, 21), which is substantially circular prior to pressing, is deformed during pressing such that, after pressing, the cross-sectional area is oval, the major axis lying substantially orthogonally to the direction of pressing.

6. 5 Method according to any of claims 1 to 5, **characterised in that** the green compact of the cermet body (20, 21) predominantly has a particle size that is at least approximately equal to the predominant particle sizes of the ceramic composition.

7. Method according to any of claims 1 to 6, **characterised in that** for the green compact of the cermet body (20, 21) a material is selected of which the shrinkage value during sintering is at least approximately equal to the shrinkage value of the material of the ceramic component.

## Revendications

1. Procédé de préparation d'un composant céramique (30) avec au moins un corps cermet (20, 21), en particulier une électrode cermet, **caractérisé en ce que** le corps cermet (20, 21) est d'abord préparé sous forme d'ébauche crue, **en ce que** le corps cermet (20, 21) est introduit dans la masse de céramique (18, 22), **en ce que** par la suite, la masse de céramique est compactée conjointement avec le corps cermet existant sous forme d'ébauche crue et finalement le frittage est réalisé.

2. Procédé selon la revendication 1, **caractérisé en ce que**, pour préparer le compactage, en particulier le pressage, un espace creux (14) d'un moule (2) est rempli partiellement avec la masse céramique, **en ce que** le corps cermet (20, 21) est posé sur la masse céramique partiellement introduite de cette façon, **en ce que**, dans une étape supplémentaire de procédé, la deuxième partie restante (22) de la masse céramique est introduite dans l'espace creux (14) du moule (2), **en ce que** par la suite, le corps moulé du composant céramique est compacté et pressé pour préparer le frittage, le corps cermet (20, 21) étant intégré en particulier dans le corps moulé.

3. Procédé selon la revendication 1, **caractérisé en ce que**, pour préparer le compactage, le corps cermet (20, 21) est fixé dans un moule de sorte qu'il se trouve au moins partiellement dans l'espace creux de celui-ci (14), **en ce que** la masse céramique est introduite dans l'espace creux (14) en particulier par coulée, au moins la partie du corps cermet (20, 21) se trouvant dans l'espace creux (14) étant complètement refermée par la masse céramique et/ou **en ce que** par la suite, le compactage est réalisé en particulier en retirant le liquide de la masse céramique.

4. Procédé selon la revendication 2, **caractérisé en ce que**, lors du pressage du corps moulé, le corps cermet (20, 21) inséré dans la masse céramique, est déformé transversalement à la direction du pressage et/ou **en ce que** lors du pressage, les dimensions extérieures de l'ébauche crue du corps cermet (20, 21) sont réduites dans la direction de pressage, et augmentées transversalement à la direction de pressage.

5. Procédé selon la revendication 3 ou 4, **caractérisé en ce que** la surface de section essentiellement circulaire avant -le pressage du corps cermet (20, 21) est déformée lors du pressage de sorte que la surface de section est ovale après le pressage, le grand axe principal se trouvant essentiellement orthogonal à la direction de pressage.

6. Procédé selon l'une quelconque des revendications 1 à 5, **caractérisé en ce que** l'ébauche crue du corps cermet (20, 21) présente principalement une granulométrie qui est au moins approximativement égale aux granulométries prépondérantes de la masse céramique.

7. Procédé selon l'une quelconque des revendications 1 à 6, **caractérisé en ce que**, pour l'ébauche crue du corps cermet (20, 21), un matériau est choisi dont la valeur de retrait lors du frittage est au moins approximativement égale à la valeur de retrait du matériau du composant céramique.
